# EUROPEAN PATENT SPECIFICATION

(11) **EP 2 291 087 B1**
(45) Date of publication and mention of the grant of the patent: **13.03.2013**
(21) Application number: 09773826.4
(22) Date of filing: 30.06.2009
(51) Int. Cl.: A23L 1/214, A23L 1/221, A23L 1/314, A23L 1/317, A23L 1/212

(54) **FLAVOUR AND TEXTURE ADDITIVE MATERIAL**
GESCHMACKS- UND TEXTURZUSATZSTOFF
MATÉRIAU ADDITIF D ARÔME ET DE TEXTURE

(30) Priority: 30.06.2008 SE 0801545
(43) Date of publication of application: 09.03.2011
(73) Proprietor: Lyckeby Culinar AB, 290 34 Fjälkinge (SE)
(72) Inventor: RALVERT, Klas, 224 67 LUND (SE); LUNDBERG, Jan-Olof, S-212 28 Malmö (SE)
(74) Representative: Jakobsson, Jeanette Helene
(86) International application number: PCT/SE2009/000343
(87) International publication number: WO 2010/002311

(56) References cited:
- EP-A1- 0 582 050
- GB-A- 1 254 910
- GB-A- 2 234 661
- DATABASE EPODOC [Online] EUROPEAN PATENT OFFICE, THE HAGUE, NL; 1 February 2007 (2007-02-01), "Method for producing onion perilla ferment pickle", XP002650944, & JP 2007 020546 A (NONAKA KYOKO) 1 February 2007 (2007-02-01)
- BARBARA BISAKOWSKI ET AL: "Effect of lactic acid fermentation of onions (Allium cepa) on the composition of flavonol glucosides", INTERNATIONAL JOURNAL OF FOOD SCIENCE AND TECHNOLOGY, vol. 42, no. 7, 1 July 2007 (2007-07-01), pages 783-789, XP55002770, ISSN: 0950-5423, DOI: 10.1111/j.1365-2621.2006.01268.x
- J Karovicova ET AL: "Organic acids production by lactic acid fermentation of vegetables (green pea and onion)", Die Nahrung, 1992, pages 500-502, XP55002996, Retrieved from the Internet: URL:http://onlinelibrary.wiley.com/store/1 0.1002/food.19920360514/asset/19920360514_ ftp.pdf?v=1&t=gq9htty6&s=cf673ade7bff3c4d5 51f7fabe84ba5693ccc1ea9 [retrieved on 2011-07-18]
- DATABASE WPI Week 200409, Derwent Publications Ltd., London, GB; AN 2004-085678, XP003026027 & JP 2004 008167 A (TOYO SHINYAKU KK) 15 January 2004
- DATABASE WPI Week 200278, Derwent Publications Ltd., London, GB; AN 2002-715489, XP003026028 & JP 2002 119238 A (TOYO SHINYAKU KK) 23 April 2002
- ROBERTS J.S. ET AL: 'Lactic acid fermentation of onions' LEBENSM.-WISS. U-TECHNOL. vol. 38, 2005, pages 185 - 190, XP004608965

## Description

### Field of the Invention

The present invention relates to a flavour and texture additive material obtainable from a vegetable start material originating from onion, comprising water soluble and water insoluble fibres and at least one type of ethereal oil from onion.

### Technical Background

Aromatic and flavouring agents are added to foodstuff to create a desired flavour profile. However, incorporation of flavourings in, for instance, food products can be problematic since many flavourings are highly volatile. This causes them to easily evaporate from the product, which thereby loses its taste, for instance, during storage and treatment. Furthermore, flavourings can decompose chemically by the handling of the food product when prepared and cooked, e.g. heated, which also results in loss of taste. Alternatively, the flavourings may react with other components included, which also results in loss or change of taste. Due to the above-mentioned factors, it has been difficult to produce food products with a desired flavour profile and/or a long shelf life in terms of added flavour originating from flavourings. One example of how taste can change in connection with storage is wine storage, where taste changes over time. In this case the change is desired, but in most other food applications it is seen as negative when tastes change, deteriorate or disappear.

One method used today is to apply flavourings onto a crystalline raw material, such as salt or sugar, i.e. to adsorb the flavourings to this crystalline raw material. However, when using this method, only a small amount of flavouring can be applied to the crystalline raw material, and it is furthermore not possible to add a large amount of flavouring applied to the crystalline raw material, since in that case the crystalline raw material would give too much flavour to the food product. For example, when using salt the food product gets too salty. In addition, flavourings applied to a crystalline raw material have a short shelf life because of relatively rapid oxidation.

Another method is spray-drying, in which the flavourings are applied to a kind of powder matrix. The most frequently used spray-drying media are maltodextrin and arabic gum, but other media are also used. In spray-drying, an emulsion is created, in which water mixed with the spray-drying medium is allowed to evaporate. This method is relatively expensive compared to that of applying flavourings onto a crystalline raw material since it is expensive to evaporate water. Moreover, spray-drying is a method which is carried out at relatively high temperatures, which causes a great deal of flavouring to be lost. As the highly volatile flavourings are present in a water emulsion, there is a great risk that they will disappear from the flavour release material since water evaporates when heated. When adding spray-dried flavours to a food preparation which in most cases contains a large amount of water, the watersoluble matrix dissolves and the added flavour raw materials are likely to evaporate and undergo internal reactions with other raw materials in the food, in particular in connection with heat treatment.

Flavour additive materials from vegetable start materials, such as e.g. onion, are frequently occurring in the food industry. The onion flavour is extremely complex as a number of volatile compounds contribute to the characteristic onion flavour. The main precursor is trans-(+)-S-(1-propenyl)-L-cysteinsulfoxide which initially is converted to 1-propene-sulphonic acid in the presence of the enzyme allinase, which exists in the cell walls and is physically separated from glycosides as long as the cell wall still is intact. This intermediate then undergoes rearrangement to form syn-propanethial-S-oxide, which makes the eye react and form tears. These products are only formed after the release of enzymes after cutting or pestling. Other flavour compounds which are released during this process include mono-, di-, tri- and tetra-trisulphides, thiophens and thiosulphonates. Mono- and trisulphides of thiophen are formed by decomposition of alkyl and alkenyl disulphides.

Flavour additive materials of e.g. frozen onion which are used for the production of food products, especially processed meat products, according to state of the art, have the disadvantage that the onion, when about to be used, has become soft and forms a turbid mud when diluted in water, and also that the onion additionally has lost a great part of its flavour. This is inter alia due to that the cell structure is broken during freezing due to the expansion of water. The break down gives release of enzymes as well as hydrolysis of glycoside bonds. This renders the formation of volatile onion agents which on one hand migrates slowly out of the onion, on the other hand oxidizes, which gives a flavour loss. Intact cells contain barriers between enzymes and substrate, but these barriers are broken when the cells are damaged, e.g. when onions are chopped.

When onion is dried a great deal of the water in the onion is removed, and as such one also looses a great amount of ethereal oils, which causes a flavour change. An analogous problem to the one described above for onion is also valid for other vegetable materials, such as carrot.

Fresh onion has the disadvantage that it may not be used in e.g. the industry for processed meat due to its microbiologic status.

EP 0 490 559 A1 discloses a flavour release material suitable for incorporation in tobacco products. This flavour release material involves a core matrix comprising a flavouring and a polysaccharide binder and a coating of alginate film. Also this carrier material presents the disadvantage that the flavour is released to a great extent in heating, since heating makes water evaporate.

EP 0 582 050 describes a flavour and texture additive material comprising lovage and onions, which are disintegrated into purée form. Some amount of juice is removed, as the onions have an amount of 20% dry matter. The mixture is fermented to a pH of 4.1, and is microbiologically stable for a long period of time when stored at 15°C. JP2007020546 teaches a flavour and texture additive material for confectioneries and drinks, comprising onions, which have been cut, squeezed to remove the juice and fermented.

Bisakowski et al. (2007) disclose a fermentation product of red onions, whereby onions have been peeled, finely chopped and fermented to a pH of about 4.5 (International Journal of Food Science and Technology 42).

Karovi 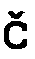 á et al (1992) describe fermented onions, which may be used as flavour and texture additive material in salads and beverages. Onions were cleaned, cut to small pieces and fermented (Die Nahrung 36).

GB 2 234 661 discloses a method for fermenting vegetables, such as onions, wherein the vegetables have been cut and fermented. A water binding agent, e.g. in the form of plant fibres, is added before fermentation, which increases the content of insoluble fibres.

JP2004 008167 relates to a food product comprising an onion fermented product.

Roberts and Kidd (2005) teach the production of fermented onions, whereby yellow onions were peeled, cut and fermented with brine from sauerkraut to a pH of about 3.6 (Lebensm.-Wiss. u. Technol. 38).

### Summary of the Invention

The object of the present invention is therefore to solve the above mentioned problems related to loss of taste, shelf life and texture of a flavour and texture additive material.

This object is obtained according to the invention by the fact that the flavour and texture additive material is provided the features revealed by the subsequent patent claim 1. Preferred embodiments of the flavour and texture additive material appear from the dependent patent claims.

### Definitions

The following terms and expressions are defined in order to facilitate the understanding of the present invention.

### Flavouring

For the present invention, the term "flavouring" relates to that classified as such according to EU standard 88/388/EEC or according to the corresponding regulations and general guidelines relating to flavours, issued by the Swedish Food Administration (SLVFS 1993:34). Section 2 of SLVFS 1993:34 states the definitions of flavour and flavouring.

### Onion

According to the present invention "onion" refers to yellow onion, red onion, white onion, pearl onion, shallot, leek, spring onion, chive and garlic. As is evident, the present invention is foremost directed to yellow onion, but also other onion types are possible to use as the vegetable start material.

### Processed meat

Prepared meat, meat product which may be salted, milled, cooked, smoked or cured. Non-mixed processed meat designates meat raw product from one and the same kind of animal, e.g. ham, bacon or salted meat. Mixed processed meat product consists of one or more meat raw products (meat, pork, cutting-up piece, organ or by-product), other raw products, additives (usually nitrite salt and ascorbic acid) and spices. Examples of mixed meat products are sausage, liver paste and brawn. Some processed meats are name protected, where some specific demands on raw product, composition and manufacturing are put according to the established food product standard according to the Swedish Food Administration. "Falukorv" is one example of a name protected product.

### Fibre material

For the present invention, "fibre material" preferably refers to a material of soluble and insoluble vegetable fibres.

### Inulin

Fibre type which exists both in regular yellow onion and in garlic. Inulin is known for its prebiotic properties, which implies that it functions as food for different intestinal bacteria and has positive effects on health. A common side effect of a high inulin intake is however increased gas formation. The amount of gas formed is not only affected by the amount of inulin, but also with reference to which intestinal bacteria that exists in the large intestine.

### Glycoside

Compounds with two distinct chemical parts, of which one is a sugar and the other one is some other kind of substance. The latter substance is called aglycone and may e.g. be an alkaloid, terpene or fatty acid, however not a sugar group. Both chemical parts are connected to each other via a glycoside bond. Glycosides play several important roles in living organisms. Many plants store important chemicals in the form of inactive glycosides. If these chemicals are needed, the glycosides are brought into contact with water and an enzyme, and the sugar part is broken off, which makes the chemical available for use.

Formally seen, a glycoside is every molecule in which a sugar group is bound by its anomeric carbon to another group via an O- or S-glycoside bond.

### Food product

According to the present invention, the expression "food product" also includes food products undergoing preparation. This means that if it is not explicitly stated "final food product" the expression "food product" can refer to a product under production as well as to a final food product.

### Detailed description of the Invention

According to the present invention there is disclosed a flavour and texture additive material obtainable from a vegetable start material originating from onion, comprising water soluble and water insoluble fibres and at least one type of ethereal oil from onion, wherein the flavour and texture additive material consists of disintegrated pieces of the vegetable start material, which disintegrated pieces comprise a vegetable fibre material with natural or created cavities, wherein said at least one type of ethereal oil from onion is provided inside of the cavities of the fibre material and wherein the content of water insoluble fibre to water soluble fibre is higher in the flavour and texture additive material than in the vegetable start material, which flavour and texture additive material is obtainable by a process comprising the following steps:
- disintegration of washed and peeled onions to a mixture comprising small onion fibres which (with regard to texture) have intact fibre structure and onion juice;
- centrifugation of the mixture, where said at least one type of ethereal oil from onion is provided inside of the cavities of the fibre material, and separation of at least a part of the onion juice from the mixture, for the production of an onion fibre mixture where the content of water insoluble fibre to water soluble fibre gets higher in the onion fibre mixture than in the vegetable start material;
   and
- fermentation of the onion fibre mixture to a pH-value between 3.5 and 5, for the production of a storage stable flavour and texture additive material originating from onion.

The main control factor for water binding properties of a vegetable start material is the amount and type of fibre present in the start material. According to the present invention it has been found that an increased ratio of insoluble fibre to soluble fibre in comparison with the unprocessed start material, such as unprocessed fresh onion, gives a better water binding capability, e.g. in comparison with deep-frozen chopped onion as well as dried onion (powder and granulates), and also that a better preserved flavour and texture is obtained.

The flavour intensity of a flavour and texture additive material according to the present invention is so large that the dosage of e.g. a flavour and texture additive material according to the invention, produced from yellow onion, may be decreased to about a fourth, in weight, in comparison with the amount of frozen onion.

The flavour and texture additive material according to the present invention also has the advantage that it does not want to absorb moisture that increases the risk of mould development, in contrast to a dried flavour additive material, such as dried onion.

The flavour and texture additive material according to the present invention also has the advantage that it has a low pH-value, which decreases the risk of unwanted growth of bacteria, moulds, etc on the product. It is also easy to handle and may easily be pumped during the production of processed meats.

According to the present invention there is provided a flavour and texture additive material which is obtainable from a vegetable start material of onion, comprising water soluble and water insoluble fibres and at least one type of ethereal oil from onion. The flavour and texture additive material consists of disintegrated pieces of the vegetable start material. The disintegrated pieces comprise a vegetable fibre material with natural or created cavities, wherein the ethereal oil is provided inside of the cavities of the fibre material, and the content of water insoluble fibre to water soluble fibre is higher in the flavour and texture additive material than in the vegetable start material.

The production of the flavour and texture additive material is obtained by means of disintegration of the vegetable start material and thereafter supply of kinetic energy, by means of centrifugation, so that a flavour binding mixture is created when the content of water insoluble fibre increases and where ethereal oil as such is provided inside of the vegetable fibre material of the flavour and texture additive material, which has unbroken glycoside bonds. Important parts of the production is to secure that a mixture is created during the increase of the content of water insoluble fibre, that important flavour components, such as ethereal oil and other possible flavourings, are provided and thereby secured inside of the cavities of the fibre material, and that the cell structure of the fibre material is not destroyed or broken, so that that there exists a structure inside of which it is possible to embed the flavour components. During the production, water soluble parts are separated away, which in the case of the start material being onion implies a separation of at least a part of the onion juice together with some water soluble onion fibres, such that an onion fibre mixture with higher content of water insoluble fibres in comparison with the start material may be created. Separation of water insoluble parts may be performed differently vigorous depending on desired type of mixture. The created mixture is then maintained for some time, such as about one day and night, in e.g. a vessel at about room temperature or slightly above. To secure a long shelf life, i.e. at least up to 6 months, the mixture is thereafter cooled to temperatures between 2-10°C, and is thereafter ready to be used as a flavour and texture additive material. Furthermore, the production is performed without additives.

The flavour and texture additive material according to the present invention is thus produced by means of disintegrating, fractionating, concentrating and fermenting. By means of this process, the dry matter of the material is increased as the proportion of insoluble fibres to soluble fibres is increased. Furthermore, the content of available primary sugars is decreased in the material. When the fermentation then is performed, the remaining sugar is consumed and the pH-value is decreased. When ethereal oil is embedded in the cavities of the fibre material, a storage stable product is then obtained as the ethereal oil has a protective effect in the form of anti-oxidizing, bactericidal and/or bacteriostatic properties. According to the present invention, a micro-stable material having a strong bacteria protection, where the risk of microbiological growth is diminished very much, is thus obtained. To obtain this effect according to the present invention, the ethereal oil plays a central role with its bactericidal effect.

### One example of the production of the flavour and texture additive material from yellow onion

As mentioned above, onion fibre mixture according to the present invention implies a mixture of onion fibres where the ratio of water insoluble fibres to water soluble fibres is higher than in the vegetable start material, such as fresh onion. Synonymous with onion fibre mixture, onion fibre material is used in the description of the production example below.

Firstly, fresh onion, which may have been stored firstly up to 6 months, is dry separated from soil remainders, stones and other contaminants, and foliage is removed. Defect material is also sorted away. Thereafter the onion is washed clean and peeled before it enters the actual process for the production of the flavour intensive onion fibre or the onion fibre mixture. In the onion fibre process, the onion is disintegrated into small fibre parts. By disintegrating to small fibre parts, the fibre structure of the onion is not destroyed, but a much greater free surface is liberated for the flavour components of the onion. By this disintegration some of the glycoside bonds remain intact until they are broken in connection with consumption, which renders the product to be conceived as fresher. During this step it is of importance not to disintegrate too vigorously so that a homogenized sludge is formed, as the fibre structure and the texture as such have been destroyed and the glycoside bonds as such have been broken, which by that causes the removal of the onion juice not being possible to perform as desired. Furthermore, the disintegration may not be performed so modest so that a too large part of the onion juice still is maintained inside of the fibre structure and too little onion oil is released, which renders the fact that enough onion juice may not be removed during a separation, which in turn restrains fermentation and by that the stability in storage. To summarize, by disintegration to small fibre parts according to the present invention, the flavour components are not liberated, and the texture and the fibre structure in the onion are not destroyed, which in turn implies that the flavour components in its further contact with a foodstuff during a subsequent food application obtain much larger possibility to penetrate into the foodstuff. This disintegration may e.g. be performed in a so called onion disintegrator. Furthermore, according to one preferred embodiment, the disintegrated pieces of the flavour and additive material are finely divided pieces from the vegetable start material, which is some type of onion.

After the disintegration, the onion fibre is concentrated to desired consistence or structure by removal of desired amount of onion juice which also contains sugar and soluble fibres. In other words, parts of the liquid components of the onion are liberated when the onion is disintegrated to smaller parts, which, after separation of these, creates conditions for a natural preservation of the end product of the onion fibre mixture and as such long shelf life. The magnitude of this separation may vary with reference to desired product specification, and it is totally possible to produce onion fibre mixtures which have higher or lower ratio of water soluble fibres and onion juice. According to one specific embodiment of the present invention, the separation of onion juice from the mixture comprising small onion fibres which have intact fibre structure and onion juice is performed so that 15-55% onion juice is separated away based on total weight of fresh onion input.

The main control factor for water binding properties of the vegetable start material is the amount, structure and type of fibre present in the start material. According to the present invention it has been shown that an increased ratio of insoluble fibre to soluble fibre in the fibre material in comparison with the unprocessed start material, such as unprocessed fresh onion, gives a better water binding ability, for example in comparison with deep-frozen chopped onion and dried onion, and also that a better preserved flavour and texture is obtained. The ratio of insoluble fibres to soluble fibres is affected according to the present invention by that separation made on onion juice and onion fibre, where a greater part of the soluble fibres follow the onion juice. By in such a way concentrating the share of insoluble fibres in the onion fibre mixture, which fibres additionally must be kept intact during processing and disintegration, the water binding property is as such increased essentially in comparison with the non-separated mixture of onion fibres and onion juice. Some soluble fibres may of course also follow the onion fibre mixture, but it is important that this amount is kept down according to desired level. Furthermore, desired level of dry matter in the onion fibre mixture may vary, which may be regulated by varied level on the separation of onion juice from the mixture comprising onion fibres and onion juice. One should realize that the separation of onion juice from the mixture in no way has to be made completely, and that the onion fibre mixture very possibly also may contain parts of onion juice after separation. Separation of onion juice is made with reference to desired end product of onion fibre mixture.

The processing conditions for the different steps according to the present invention may vary. The fermentation is however a very important step to lower the pH-value of the onion fibre mixture and as such increase the stability in storage, and it is very important that this fermentation is performed with pH-control. The pH-value of the disintegrated fresh onion, i.e. onion fibre and onion juice, is about 6 (pH-value 5-7). The fermentation shall be performed in conditions which allow the pH-value of the onion fibre fraction to be lowered from pH-value 6 to a pH-value between 3.5 and 5. According to yet another embodiment of the present invention, the fermentation of the onion fibre mixture is performed to a pH-value of between 3.8 and 4.5. The low pH-value of the fibre mixture decreases the risk for unwanted growth of bacteria, moulds etc. on the product. Furthermore, the fermentation may be performed at 15-30°C for 15-30 hours, such as one day and night, but if the temperature is as low as 15°C, then the fermentation time may be up to two days and nights.

The fermentation may be performed with different types of equipment and in different ways. For example, the fermentation may be performed in so called fermentation vessels, where this is made either in a vessel or a container for the onion fibre mixture. The fermentation may be made batch wise, semi-batch wise or completely continuously.

The fermented onion fibre mixture is suitably cooled after the fermentation and is then stored at a cooled temperature, such as to a temperature of between 2°C and 10°C, which also is a suitable storage temperature. Furthermore, according to one specific embodiment, the flavour and texture additive material is microbiologically stable at a temperature of 2-10°C, which even further amplifies the fact that such temperatures are suitable for storage of the flavour and texture additive material. Furthermore, the cooling step is important for the fermentation to decay, which otherwise does not occur, and as such enable for long storage time of the onion fibre mixture. If the fermentation process should be allowed to continue uncontrolled at a too high level too long, then the pH-value decreases to a too low level, which implies that the energy content of the mixture is consumed and that the fermentation process stops and total amount of bacteria in the onion fibre mixture once again rises and the product becomes unsuitable as a food raw product. pH-values down to close to 3.5 for the onion fibre mixture are normally not desirable as a sourish smell and flavour then may be obtained. It is however important to point out that the onion fibre mixture in itself still is very stable and may be stored in at least a week and surely a number of weeks in room temperature after the fermentation and still keep a desired pH-value. To prolong the shelf life, cooling is however necessary to stop the fermentation.

The process concept according to above, where onion is the base in the production as a natural and secure fermentation source, may be combined with other raw materials, such as herbs, vegetables, potatoes, spices, to create a combined concept of different ingredients which is natural, energy-saving and stable in storage. The process concept may as such also function as sterilization when spices and herbs are admixed. Today known technology for this is evaporation, irradiation.

Therefore, according to one specific embodiment of the present invention, there is disclosed a flavour and texture additive material where at least one food raw product with risk of having microbiological activity has been added during anyone of the process steps, for lowering total amount of bacteria to levels which are approved and suitable for a foodstuff in a combined food raw product comprising said at least one food raw product and the onion fibre mixture, or as a sterilization process of the combined food raw product, when fermentation is made of the combined food raw product. In this case the onion fibre mixture, during fermentation, functions as a fermentation substrate which may decrease the microbiological activity for the combined foodstuff or the combined food raw product, such as from e.g. bacteria, which originates from the raw product which has been added and from the onion itself. As mentioned, the onion fibre mixture is cooled before the fermentation of this has exceeded too long. This implies that a raw product which by risk comprises e.g. bacteria also may be added to an onion fibre mixture after this has been cooled, i.e. after the fermentation has been performed, due to the fact that there still exists fermentation capacity in this if the temperature is increased. Examples of food raw products with risk of having microbiological activity are e.g. herbs, vegetables, potatoes, spices and flavouring according to EU standard 88/388/EEC, or different combinations thereof.

As is evident from the description above, the start material which is processed according to the present invention is fresh onion, however also onion which has been stored for some time. According to one specific embodiment of the present invention, the onions processed are of any kind of onion or a mixture of different types of onions. Such different types of possible onions are e.g. yellow onion, red onion, white onion, pearl onion, shallot, leek, spring onion, chive and garlic. According to one specific embodiment, the onions processed are yellow onion.

Table 1 below specifies the content of dry matter and pH-values for different fermented onion fibre mixtures, where different amounts of onion juice have been separated away, and how the pH-values in this case are changed during storage and as stored onion products. In this case the pH-values for the stored onion products are measured on respective mixtures after about 1 week of storage at cooling temperatures given above, i.e. 2-10°C. The different mixtures which have been evaluated are non-dewatered mixture, i.e. a mixture comprising onion fibre and onion juice, an onion fibre mixture where 20-25 weight% onion juice has been removed (weight% calculated on total inflow weight of fresh unwashed and unpeeled onion as 100 weight%), called batch 1, and an onion fibre mixture where 45-55 weight% onion juice has been removed (weight% based on total inflow weight of fresh unwashed and unpeeled onion as 100 weight%), called batch 2. Different trials have been performed with level of removal according to batch 1 and batch 2, respectively, and the mean values for these trials are presented in table 1 below.

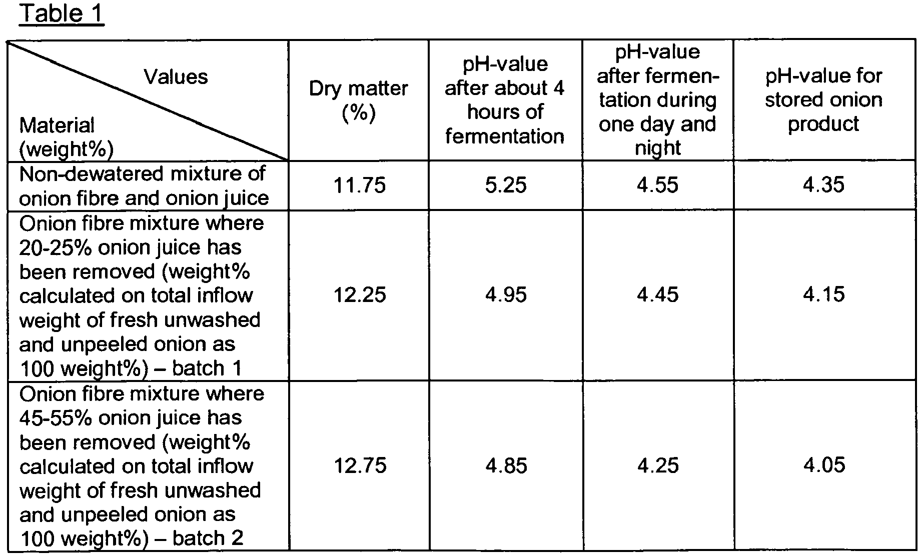

The values above are given as mean values of different trials with removal of onion juice according to batch 1 and batch 2, respectively.

As may be seen in table 1, the proportion of dry matter increases when onion juice is separated away from the mixture comprising onion fibres and onion juice. Furthermore, it is clear that the pH-values are lower for the fermented onion fibre mixtures when a larger amount of onion juice has been removed after both 4 hours fermentation and fermentation during one day and night and also as stored products.

### Properties of the flavour and texture additive material according to the invention

When the flavour and texture additive material according to the present invention is mixed in water a clear solution is obtained, where the well defined fibre particles of the flavour and texture additive material have settled on the bottom. When finely chopped deep-frozen onion is mixed in water a turbid solution without well defined particles is obtained. The effect of inter alia this difference is clear in the end application, which may be seen from the examples below.

According to one preferred embodiment, the vegetable start material originates from yellow onion and the ethereal oil is ethereal oil from yellow onion.

According to another preferred embodiment, when the start material is yellow onion, the content of soluble fibre is lower in the flavour and texture additive material than in the start material.

According to one preferred embodiment, the water binding property of the flavour and texture additive material, when the start material is yellow onion, is higher than that of dried onion powder or deep-frozen chopped onion, due to undamaged cells.

The flavour and texture additive material according to the present invention is stable in storage at a temperature of 2-10°C and has a long shelf life for these temperature conditions. An evaluation of the stability in storage has been made, and after 10 months no signs of microbiologic activity or change in taste or function have been detected. According to one specific embodiment of the present invention, the stability in storage of the flavour and texture additive material, when the start material is yellow onion, therefore is at least 6 months when it is kept cooled at 2-10°C.

Examples of food products comprising a flavour and texture additive material according to the present invention are processed food products, such as processed meats, sauces and soups, and also dairy products, such as cheese and spread. Furthermore, the food product may be a snack product, such as potato chips, cheese doodles or the like, or a bakery product, such as bread. Food products which may be defined as something in between these, such as crackers, are also possible.

### Examples

The following examples are intended to illustrate the present invention and shall not be regarded as a limitation thereof.

### Sensory evaluation test

A sensory evaluation and consistence test for the comparison of taste and consistence of the flavour and texture additive material according to the present invention, produced from yellow onion, as well as conventional frozen onion and dried onion was performed. One in the company internal expert panel built up via a sensory evaluation program, consisting of 39 persons, both men and women, where allowed to taste meatballs, both hot and cold, containing either the flavour and texture additive material according to the invention, frozen onion or dried onion. The comparison was made by ranking the different samples, where 1 was considered as the best and 5 was considered as the worst. The samples were marked with 1, 2 or 3 according to the following: Sample 1: Flavour and texture additive material according to the invention Sample 2: Frozen onion

### Sample 3: Dried onion

The result of the comparison is summarized below in table 2.

**Table 2**

| Sample | Sample 1 | Sample 2 | Sample 3 |
|---|---|---|---|
| Sensory evaluation | 37 | 50 | 49 |
| Consistence | 35 | 47 | 46 |

If one starts out from that frozen onion in the recipe is dosed as 100% of all onion addition, then 25% is used as the flavour and texture additive material + 75% of the frozen onion amount has been added as water. Analogous, for dried onion it is 12.5% onion + 87.5% water.

### Texture measurement of sausage

A texture measurement on emulsion sausage was performed by use of an ebonite rod of 10 mm. On one hand the measurements were made on sausage containing the flavour and texture additive material according to the present invention, produced from yellow onion, and on the other hand on sausage with other onion additives according to state of the art. The texture measurements were performed with Stabel Microsystems Texture Analyser. This measurement gave the sausage with the flavour and texture additive material according to the invention a value of 1303, against 1284 and lower for the other onion additives. At the same time an organoleptic testing was made to decide the right "bite", i.e. the right consistence of the sausage, and an expert panel consisting of 39 persons became united regarding that such a value was at about 1300. Additionally, they also found that the flavour and texture additive material according to the present invention gave a better texture than the reference material.

The performed trials on the emulsion sausage may also be applied to other processed meat products containing onion, such as cold-smoked sausage, uncooked sausage, liver products, etc.

### Microbiologic analysis

The following nomenclatures were used for the microbiological analysis:
Tot. number NMKL No. 86, ed. 4, 2006
Koliforma 37 NMKL No. 44, ed. 6, 2004
Bac. cereus NMKL No. 67, ed. 5, 2003
Cl. perfringens NMKL No. 95, ed. 4, 2006
Yeast and moulds NMKL 98, ed. 4, 2005
Salmonella neg. in 25 gram NMKL No. 71, ed. 5, 1999.

With reference to dried onion the limit value of tot. number is <1 million and is for yeast and moulds max 1000 cfu/g.

During a period of 8 months, the bacteria values for the flavour and texture additive material according to the present invention, produced from yellow onion, have been values according to the following:

| | |
|---|---|
| Tot. number NMKL No. 86, ed. 4, 2006: | <1000 |
| Koliforma 37 NMKL No. 44, ed. 6, 2004: | <10 |
| Bac. cereus NMKL No. 67, ed. 5, 2003: | <100 |
| Cl. perfringens NMKL No. 95, ed. 4, 2006: | <100 |
| Yeast and moulds NMKL 98, ed. 4, 2005: | <100 |
| Salmonella neg. in 25 gram NMKL No. 71, ed. 5, 1999: | negative. |

The flavour and texture additive material according to the present invention has a low pH-value and has a presence of active ethereal oil, which hinders bacteria growth.

## Claims

1. Flavour and texture additive material obtainable from a vegetable start material originating from onion, comprising water soluble and water insoluble fibres and at least one type of ethereal oil from onion, wherein the flavour and texture additive material consists of disintegrated pieces of the vegetable start material, which disintegrated pieces comprise a vegetable fibre material with natural or created cavities, wherein said at least one type of ethereal oil from onion is provided inside of the cavities of the fibre material and wherein the content of water insoluble fibre to water soluble fibre is higher in the flavour and texture additive material than in the vegetable start material, which flavour and texture additive material is obtainable by a process comprising the following steps:
- disintegration of washed and peeled onions to a mixture comprising small onion fibres which have intact fibre structure and onion juice;
- centrifugation of the mixture, where said at least one type of ethereal oil from onion is provided inside of the cavities of the fibre material, and separation of at least a part of the onion juice from the mixture, for the production of an onion fibre mixture where the content of water insoluble fibre to water soluble fibre gets higher in the onion fibre mixture than in the vegetable start material, wherein the separation of at least a part of the onion juice from the mixture comprising small onion fibres which have intact fibre structure and onion juice is performed so that 15-55% onion juice is separated away based on total weight of fresh onion input;
and
- fermentation of the onion fibre mixture to a pH-value between 3.5 and 4.5, for the production of a storage stable flavour and texture additive material originating from onion,
wherein the process is performed without additives.

2. Flavour and texture additive material according to claim 1, wherein the fermentation of the onion fibre mixture is performed to a pH-value of between 3.8 and 4.5.

3. Flavour and texture additive material according to claim 1 or 2, wherein the disintegrated pieces are finely divided pieces from the vegetable start material originating from onion.

4. Flavour and texture additive material according to anyone of the preceding claims, wherein the type of onion is yellow onion.

5. Flavour and texture additive material according to anyone of the preceding claims, wherein the flavour and texture additive material is microbiologically stable at a temperature of 2-10°C.

6. Flavour and texture additive material according to claim 5, wherein the stability in storage for the flavour and texture additive material is at least 6 months.

7. Flavour and texture additive material according to anyone of the preceding claims, wherein at least one food raw product with risk of having microbiological activity has been added during anyone of the production steps, for lowering total amount of bacteria to approved and suitable levels for a foodstuff in a combined food raw product comprising said at least one food raw product and the onion fibre mixture, or as a sterilization process of the combined food raw product, when fermentation is made of the combined food raw product.

8. Flavour and texture additive material according to claim 7, wherein said at least one food raw product is chosen from the group consisting of herbs, vegetables, potatoes, spices, and flavouring according to EU standard 88/388/EEC, or is a combination thereof.

## Patentansprüche

1. Geschmacks- und Textur-Zusatzstoffmaterial, erhältlich aus einem pflanzlichen Ausgangsmaterial, das aus Zwiebeln stammt, umfassend wasserlösliche und wasserunlösliche Fasern und wenigstens einen Typ von etherischem Öl aus Zwiebeln, wobei das Geschmacks- und Textur-Zusatzstoffmaterial aus zerkleinerten Stücken des pflanzlichen Ausgangsmaterials besteht, welche zerkleinerten Stücke ein pflanzliches Fasermaterial mit natürlichen oder erzeugten Höhlungen umfasst, wobei der wenigstens eine Typ von etherischem Öl aus Zwiebeln im Inneren der Höhlungen des Fasermaterials bereitgestellt ist und wobei der Gehalt an wasserunlöslichen Fasern zu wasserlöslichen Fasern in dem Geschmacks- und Textur-Zusatzstoffmaterial höher ist als in dem pflanzlichen Ausgangsmaterial, welches Geschmacks-und Textur-Zusatzstoffmaterial erhältlich ist durch ein Verfahren, umfassend folgende Schritte:
- Zerkleinern von gewaschenen und geschälten Zwiebeln zu einem Gemisch, das kleine 2wiebelfasern, die eine intakte Faserstruktur aufweisen, und Zwiebelsaft umfasst;
- Zentrifugieren des Gemischs, wobei der wenigstens eine Typ von etherischem Öl aus Zwiebeln im Inneren der Höhlungen des Fasermaterials bereitgestellt i s t , u n d Abtrennen von wenigstens einem Teil des Zwiebelsafts von dem Gemisch, zum Herstellen eines Zwiebelfasergemischs, bei dem der Gehalt an wasserunlöslichen Fasern zu wasserlöslichen Fasern in dem Zwiebelfasergemisch höher wird als in dem pflanzlichen Ausgangsmaterial, wobei das Abtrennen von wenigstens einem Teil des Zwiebelsafts von dem Gemisch, das kleine Zwiebelfasern, die eine intakte Faserstruktur aufweisen, und Zwiebelsaft umfasst, so durchgeführt wird, dass 15-55 % Zwiebelsaft, bezogen auf das Gesamtgewicht der Zufuhr an frischen Zwiebeln, abgetrennt wird;
und
- Fermentieren des Zwiebelfasergemischs auf einen pH-Wert zwischen 3,5 und 4,5 zum Herstellen eines lagerungsstabilen, aus Zwiebeln stammenden Geschmacks- und Textur-Zusatzstoffmaterials,
wobei das Verfahren ohne Zusatzstoffe durchgeführt wird.

2. Geschmacks- und Textur-Zusatzstoffmaterial gemäß Anspruch 1, wobei das Fermentieren des Zwiebelfasergemischs auf einen pH-Wert zwischen 3,8 und 4,5 durchgeführt wird.

3. Geschmacks- und Textur-Zusatzstoffmaterial gemäß Anspruch 1 oder 2, wobei die zerkleinerten Stücke fein verteilte Stücke des pflanzlichen, aus Zwiebeln stammenden Ausgangsmaterials sind.

4. Geschmacks- und Textur-Zusatzstoffmaterial gemäß einem der vorstehenden Ansprüche, wobei der Typ von Zwiebeln gelbe Zwiebeln ist.

5. Geschmacks- und Textur-Zusatzstoffmaterial gemäß einem der vorstehenden Ansprüche, wobei das Geschmacks- und Textur-Zusatzstoffmaterial bei einer Temperatur von 2-10 °C mikrobiologisch stabil ist.

6. Geschmacks- und Textur-Zusatzstoffmaterial gemäß Anspruch 5, wobei die Lagerungsstabilität des Geschmacks- und Textur-Zusatzstoffmaterials wenigstens 6 Monate beträgt.

7. Geschmacks- und Textur-Zusatzstoffmaterial gemäß einem der vorstehenden Ansprüche, wobei wenigstens ein Lebensmittel-Rohprodukt mit einem Risiko, mikrobiologische Aktivität aufzuweisen, während einem der Herstellungsschritte zugegeben worden ist, um die Gesamtmenge an Bakterien auf zugelassene und geeignete Werte für ein Lebensmittel in einem kombinierten Lebensmittel-Rohprodukt, welches das wenigstens eine Lebensmittel-Rohprodukt und das Zwiebelfasergemisch umfasst, zu senken oder als Sterilisationsverfahren des kombinierten Lebensmittel-Rohprodukts, wenn Fermentation des kombinierten Lebensmittel-Rohprodukts durchgeführt wird.

8. Geschmacks- und Textur-Zusatzstoffmaterial gemäß Anspruch 7, wobei das wenigstens eine Lebensmittel-Rohprodukt ausgewählt ist aus der Gruppe bestehend aus Kräutern, Gemüse, Kartoffeln, Gewürzen und Aromen gemäß EU-Richtlinie 88/388/EWG oder eine Kombination davon ist.

## Revendications

1. Matériau additif d'arôme et de texture, pouvant être obtenu à partir d'un matériau de départ végétal issu d'oignon, comprenant des fibres solubles dans l'eau et insolubles dans l'eau et au moins un type d'huile éthérée issue d'oignon, **caractérisé en ce que** le matériau additif d'arôme et de texture est constitué de morceaux désintégrés du matériau de départ végétal, lesquels morceaux désintégrés comprennent un matériau de fibres végétales ayant des cavités naturelles ou créées, où ledit au moins un type d'huile éthérée issue d'oignon est fourni à l'intérieur des cavités du matériau de fibres et où la teneur en fibres insolubles dans l'eau par rapport aux fibres solubles dans l'eau est supérieure dans le matériau additif d'arôme et de texture par rapport au matériau de départ végétal, lequel matériau additif d'arôme et de texture peut être obtenu par un procédé comprenant les étapes suivantes :
- la désintégration d'oignons lavés et pelés en un mélange comprenant de petites fibres d'oignon ayant une structure de fibres intacte et du jus d'oignon ;
- la centrifugation du mélange, où ledit au moins un type d'huile éthérée issue d'oignon est fourni à l'intérieur des cavités du matériau de fibres, et la séparation d'au moins un partie du jus d'oignon à partir du mélange, pour la production d'un mélange de fibres d'oignon où la teneur en fibres insolubles dans l'eau par rapport aux fibres solubles dans l'eau devient supérieure dans le mélange de fibres d'oignon par rapport au matériau de départ végétal, où la séparation d'au moins une partie du jus d'oignon à partir du mélange comprenant de petites fibres d'oignon ayant une structure de fibres intacte et du jus d'oignon est effectuée de sorte que 15-55% du jus d'oignon soit séparé sur la base du poids total d'intrant d'oignon frais :
et
- la fermentation du mélange de fibres d'oignon à une valeur de pH comprise entre 3,5 et 4,5, pour la production d'un matériau additif d'arôme et de texture, stable au stockage et issu d'oignon,
**caractérisé en ce que** le procédé est mis en oeuvre sans additifs.

2. Matériau additif d'arôme et de texture selon la revendication 1, **caractérisé en ce que** la fermentation du mélange de fibres d'oignon est effectuée à une valeur de pH comprise entre 3,8 et 4,5.

3. Matériau additif d'arôme et de texture selon la revendication 1 ou 2, **caractérisé en ce que** les morceaux désintégrés sont des morceaux finement divisés du matériau de départ végétal issu d'oignon.

4. Matériau additif d'arôme et de texture selon l'une quelconque des revendications précédentes, **caractérisé en ce que** le type d'oignon est un oignon jaune.

5. Matériau additif d'arôme et de texture selon l'une quelconque des revendications précédentes, **caractérisé en ce que** le matériau additif d'arôme et de texture est microbiologiquement stable à une température de 2-10°C.

6. Matériau additif d'arôme et de texture selon la revendication 5, **caractérisé en ce que** la stabilité au stockage du matériau additif d'arôme et de texture est d'au moins 6 mois.

7. Matériau additif d'arôme et de texture selon l'une quelconque des revendications précédentes, **caractérisé en ce qu'**au moins une matière première alimentaire risquant de développer une activité microbiologique a été ajoutée au cours de l'une quelconque des étapes de production, pour abaisser la quantité totale de bactéries jusqu'à des taux autorisés et convenables pour un produit alimentaire dans une matière première alimentaire combinée comprenant ladite au moins une matière première alimentaire et le mélange de fibres d'oignon, ou comme procédé de stérilisation de la matière première alimentaire combinée, lorsqu'on fait fermenter la matière première alimentaire combinée.

8. Matériau additif d'arôme et de texture selon la revendication 7, **caractérisé en ce que** ladite au moins une matière première alimentaire est choisie dans le groupe constitué par les herbes, les légumes, les pommes de terre, les épices et les agents aromatisants selon la directive européenne 88/388/CEE, ou constitue une combinaison de ceux-ci.
